# EUROPÄISCHE PATENTSCHRIFT

(11) **EP 2 599 211 B1**
(45) Veröffentlichungstag und Bekanntmachung des Hinweises auf die Patenterteilung: **04.03.2015**
(21) Anmeldenummer: 11738677.1
(22) Anmeldetag: 13.07.2011
(51) Int. Cl.: H02P 1/18, H02P 29/02, H02K 11/00, F02N 11/10

(54) **ELEKTRISCHE MASCHINE, STARTVORRICHTUNG UND VERFAHREN ZUM BETREIBEN EINER STARTVORRICHTUNG**
ELECTRIC MOTOR, STARTING DEVICE, AND METHOD FOR OPERATING A STARTING DEVICE
MOTEUR ÉLECTRIQUE, DISPOSITIF DE DÉMARRAGE ET PROCÉDÉ POUR FAIRE FONCTIONNER UN DISPOSITIF DE DÉMARRAGE

(30) Priorität: 29.07.2010 DE 102010038601
(43) Veröffentlichungstag der Anmeldung: 05.06.2013
(73) Patentinhaber: Robert Bosch GmbH, 70442 Stuttgart (DE)
(72) Erfinder: BAYER, Michael, 71636 Ludwigsburg (DE); SCHICK, Matthias, 71638 Ludwigsburg (DE)
(86) Internationale Anmeldenummer: PCT/EP2011/061966
(87) Internationale Veröffentlichungsnummer: WO 2012/013498

(56) Entgegenhaltungen:
- DE-A1- 19 716 759
- DE-A1- 19 942 911
- JP-A- 2 290 142
- JP-A- 7 305 672
- JP-A- 2000 143 199

## Beschreibung

### Stand der Technik

Die Erfindung bezieht sich auf eine elektrische Maschine, insbesondere einen Startermotor zum Starten einer Brennkraftmaschine, mit einem Kommutator, einem Bürstenapparat mit Bürstenpaaren, mit einer pluspolseitigen Stromschiene und einer minusseitigen Bürstenplatte. Die Erfindung bezieht sich ferner auf eine Startvorrichtung zum Starten einer Brennkraftmaschine, insbesondere von einem Kraftfahrzeug, mit einem Startermotor und einer Startersteuerung, die den Startermotor ansteuert. Die Erfindung bezieht sich auf ein Verfahren zum Betreiben einer Startvorrichtung zum Starten einer Brennkraftmaschine, insbesondere in einem Fahrzeug mit einem Startermotor und einer Startersteuerung. Die Erfindung bezieht sich auch auf ein Computerprogrammprodukt.

Zum Starten von Brennkraftmaschinen sind mechanisch kommutierte Gleichstrommotoren bekannt. Der Einsatz der elektrischen Maschine für einen Start-Stopp-Betrieb in einem Kraftfahrzeug erfordert eine erhöhte Leistung von der elektrischen Maschine, die zu einem erhöhten Verschleiß führt bzw. Grenzbereiche schneller erreichen lässt, die die elektrische Maschine zerstören kann, wie z.B. in JP 02290142 beschrieben.

Gleichstrommotoren weisen ein oder mehrere Bürstenpaare auf, die Strom über einen Kommutator in die Ankerwicklung einleiten. Die Bürstenpaare sind aus Sinterwerkstoff hergestellt, der im Wesentlichen Kupfer- und Graphitanteile aufweist. Ein solcher Startermotor ist typischerweise für einen kurzzeitigen Betrieb und normalerweise für 30 - 60.000 Schaltzyklen ausgelegt. Um den Startermotor auch für Start-Stopp-Anwendungen einsetzen zu können, sind vorzugsweise nach neusten Entwicklungen sechs statt vier Kohlebürsten vorgesehen.

Ferner ist bekannt, einen Überlastschutz vorzusehen, der gewährleistet, dass die äußeren Komponenten nicht glühen bzw. brennen. Als Überlastschutz sind beispielsweise eine gezielte Schwächung von Kohlebürstenlitze oder von Stromschienen im Startermotor dem Anmelder bekannt.

Die DE 100 41 822 A1 beschreibt eine elektrische Startvorrichtung für eine Brennkraftmaschine mit einem Startermotor. Um einen kostengünstigen und zuverlässigen Überlastschutz zu realisieren, ist mindestens ein Abschnitt im Hauptstromkreis des Startermotors, insbesondere eine Anschlusslitze der Kohlebürsten als Schmelzsicherung ausgebildet. Der Überlastschutz unterbricht den Hauptstromkreis des Startermotors in Abhängigkeit von Stromstärke und Zeitdauer.

Um eine hohe Lebensdauer mit hohen Rotationsgeschwindigkeiten zu erreichen, ist ferner bekannt, die Kommutatoren mit ein oder zwei Armierungen auszubilden.

Ferner besteht die Tendenz, die Startermotoren möglichst klein mit einer hohen Leistungsfähigkeit vorzusehen, wie z.B. in DE 19942911 und JP 2000143199. Eine hohe Leistung erfordert möglichst große Bürstenlitzenquerschnitte. Eine gezielte Schwächung der Bürstenlitze als Überlastschutz steht der Forderung einer hohen Leistungsabgabe entgegen.

Es sind außerdem elektrische Thermosensoren mit zwei unterschiedlich dotierten Halbleitermetallen, die aufgrund des Seebeck-Effekts bei einer Temperaturdifferenz eine elektrische Spannung erzeugen, bekannt.

Es ist Aufgabe der Erfindung eine elektrische Maschine, eine Startvorrichtung, ein Verfahren zum Betreiben einer Startvorrichtung und ein Computerprogrammprodukt der eingangs genannten Art derart weiterzubilden, dass eine elektrische Maschine zum Starten einer Brennkraftmaschine bei erhöhter Belastung, insbesondere aufgrund eines Start-Stopp-Betriebs, eine hohe Lebensdauer aufweist.

### Offenbarung der Erfindung

Erfindungsgemäß wird die Aufgabe durch den Gegenstand der Patentansprüche 1, 7, 8 und 9 gelöst. Die abhängigen Ansprüche definieren bevorzugte Weiterbildungen der Erfindung.

Ein Gedanke der Erfindung ist, einen Überlastschutz in der elektrischen Maschine dadurch vorzusehen, dass ein thermischer Sensor, insbesondere an stromführenden Elementen, in oder an der elektrischen Maschine ausgebildet ist. Der thermische Sensor kann in der elektrischen Maschine an der Stromschiene, an Litzen der Kohlebürsten oder an der Bürstenplatte angeordnet sein. Ebenso kann der thermische Sensor an dem Gehäuse der Maschine angeordnet sein. Dies bringt jedoch eine gewisse Unschärfe im Messergebnis.

Die Aufgabe wird mit einer Startvorrichtung und einem Verfahren zum Betreiben einer Startvorrichtung dadurch gelöst, dass der Startermotor mit einem thermischen Sensor ausgebildet ist und der thermische Sensor in Wirkverbindung mit der Startersteuerung steht.

Verfahrensmäßig wird der Startermotor von der Startersteuerung in Abhängigkeit von Messwerten des thermischen Sensors als Überlastungsschutz angesteuert. Bevorzugt wird eine Temperaturüberwachung direkt in der elektrischen Maschine, vorzugsweise an der Pluspolseite, sogenannte Klemme 45, oder an der pluspolseitigen Stromschiene realisiert. Im Überlastfall wird vor einem Durchbrennen der Litzen bzw. aufgrund einer zu hohen Erwärmung im Inneren eines Startermotors die elektrische Maschine abgeschaltet. Somit wird ein mögliches Glühen oder Brennen von inneren und äußeren Komponenten am Startermotor vermieden. Ein weiterer Vorteil ist, dass der Überlastschutz reproduzierbar gleichmäßiger erfolgt und hochgenau individuell einstellbar ist. Ferner ist die elektrische Maschine durch den Einsatz eines Überlastschutzes, der sich nicht gleich selbst zerstört in der Lebensdauer verlängert, da der Überlastschutz mehrfach im Betrieb auftreten kann und nicht gleich die elektrische Maschine außer Funktion setzt. Bei einer Überlastsicherung in der elektrischen Maschine beispielsweise über die Litzentemperatur an der Bürste kann es je nach Lastpunkt und je nach Belastungsart zu einem relativ frühen oder auch späten Durchschmelzen der Bürstenlitzen kommen, da sonstige Erwärmungen in der elektrischen Maschine nicht mit einbezogen werden können und es mitunter zu sehr hohen Temperaturen an weiteren Komponenten kommen kann. Dies kann beispielsweise durch gezieltes Wiederholen der Belastung auftreten, beispielsweise aufgrund eines Start-Stopp-Betriebs, was zu einem Temperaturausgleich zwischen Innen- und Außenkomponenten des Startermotors führt. Somit treten an der Pluspolseite der elektrischen Maschine im Einzelfall sehr hohe Temperaturen auf, die im Einzelfall die geforderten Ansprüche an einen Überlastschutz nicht mehr erfüllen. Einen Überlastschutz ohne Schmelzsicherung zu konstruieren, hat den Vorteil, dass eine hohe Leistung aufgrund großer Bürstenlitzenquerschnitte realisierbar ist, bei gleichzeitig kompakter kleiner Bauweise der elektrischen Maschine.

Um den Thermosensor in Wirkverbindung mit der Startersteuerung als Überlastschutz einzusetzen, wird bevorzugt bevor oder während der Startermotor von der Startersteuerung angesteuert wird, mittels des thermischen Sensors überprüft, ob der Startermotor unter einer Grenztemperatur in einem Temperaturfenster, insbesondere unter 150°C betreibbar ist oder betrieben wird, andernfalls wird der Startermotor ausgeschaltet. Zunächst wird der Start-Stopp Betrieb außer Funktion gesetzt, sodass nur noch ein "normales" Starten des Motors möglich ist. Die Brennkraftmaschine des Fahrzeugs wird somit nicht an jeder Ampel ausgeschaltet. Wird aber eine "kritische" Temperatur erreicht, was äußerst selten auftritt, ist kein Start mehr möglich. Die Startvorrichtung, muss dann erst abkühlen. So wird ein Brennen / Glühen der Komponenten am Startermotor verhindert.

Besonders bevorzugt sind zwei Grenztemperaturen, eine erste, höhere für einen Kaltstart und eine niedrigere, zweite für einen Start-Stopp-Betrieb eines Kraftfahrzeugs festgesetzt. Der thermische Sensor erfasst eine Temperaturerhöhung in Form einer Spannungspotentialdifferenz, die an eine Steuerung mit einer entsprechenden Auswerteelektronik weitergeleitet wird. Die Steuerung kann eine Startersteuerung sein, die Steuerung kann auch in einer anderen beliebigen Steuerung eingebaut sein und kann auch beispielsweise in einer Motorsteuerung der Brennkraftmaschine integriert sein. Bevorzugt ist in dieser Steuerung beispielsweise in der Startersteuerung, ein Temperaturfenster festgelegt, in der der Startermotor betreibbar ist. So kann beispielsweise vorgesehen sein, dass eine erste eingestellte Grenztemperatur vorgegeben ist, wird diese überschritten, beispielsweise weil der Startermotor eine längere Anlaufzeit benötigt, so kann ein weiterer Start beispielsweise in Form eines Start-Stopp-Betriebs durch die Steuerung verhindert werden, da der Startermotor eine noch zu hohe Temperatur besitzt.

In einem Zwischenschritt kann abgefragt werden, ob die Temperatur des Startermotors inzwischen gesunken ist, so dass wieder ein Start-Stopp-Betrieb ausgeführt werden kann. Die Aussetzung des Start-Stopp-Betriebs, weil kein Start durch den Startermotor wegen einer Überhitzung ausführbar ist, kann beispielsweise dem Fahrer über eine Warnleuchte oder mittels einer Textanzeige im Display angezeigt werden. Ferner kann eine zweite Grenztemperatur vorgesehen sein, die ähnlich wie eine bekannte Schmelzsicherung funktioniert, so dass der Startermotor bei einer Überschreitung einer zweiten Grenztemperatur sofort ausgeschaltet wird, um eine größere Beschädigung von elektrischen Komponenten zu vermeiden. Da die elektrische Maschine bei einem Kaltstart eines Kraftfahrzeugs im Wesentlichen kalte Komponenten umfasst, ist für einen Kaltstart eine höhere Grenztemperatur vorgesehen und für einen Start-Stopp-Betrieb, bei dem die elektrische Maschine auch durch eine Wärmeverbindung mit der Brennkraftmaschine miterwärmt wird, aufgrund von Konvektion der Brennkraftmaschine, eine niedrigere Grenztemperatur festgesetzt.

Um den Startermotor effizienter einzusetzen, wird bevorzugt eine Regelbetriebszeit vom Startermotor abhängig von der tatsächlichen Temperatur des Startermotors variiert. Somit kann noch besser die Leistungsfähigkeit des Startermotors angepasst werden und eine starre Regelbetriebszeit, wie sie bisher üblich ist, aufgelöst werden. Die Regelbetriebszeit sieht maximal 30 Sekunden Betriebszeit und danach 60 Sekunden Zwangspause vor, um eine Überlastung zu verringern. Auf extreme Startvorgänge, die eine Belastungsgrenze bereits unter 30 Sekunden erreichen, kann von der Steuerung reagiert werden, und andererseits ist auch eine längere Ansteuerzeit von über 30 Sekunden möglich, wenn eine Beschädigung eines Startermotors noch nicht droht. Die Belastungsvorgänge können variieren, da die Ausgangstemperatur des Startermotors in der Regel zwischen -25°C und 130°C schwanken kann.

Gemäß einem die Erfindung weiterbildenden Verfahren, wird während eines Start-Stopp-Betriebsmodus der Brennkraftmaschine für einen Stopp der Brennkraftmaschine die Temperatur des Startermotors abgefragt und der Start-Stopp Modus der Brennkraftmaschine dann deaktiviert wird, wenn die Temperatur des Startermotors eine unzulässige Startgrenztemperatur aufweist. Somit wird verhindert, dass die elektrische Maschine in unzulässige Betriebsbereiche kommt, wenn beispielsweise die elektrische Maschine bereits auf einem hohen Temperaturniveau, insbesondere größer als 80°C, sich befindet und die Startvorrichtung als warm gilt. Das erfindungsgemäße Verfahren führt somit eine weitere Bedingung im Start-Stopp-Betriebsmodus, neben bekannten Stopp-Bedingungen für einen Start-Stopp-Betrieb ein.

Gemäß eines weiter bevorzugten Verfahrens wird während eines Start-Stopp-Betriebsmodus der Brennkraftmaschine die Temperatur des Startermotors abgefragt und eine Startstrategie der Brennkraftmaschine in Abhängigkeit der Temperatur vom Startermotor von der Startersteuerung ausgeführt. Je nach Realisierung eines Start-Stopp-Betriebsmodus kann die Startersteuerung verschiedene Startstrategien implementiert haben. Zum Beispiel gibt es eine Startstrategie, um die Verfügbarkeit der Brennkraftmaschine zu erhöhen, gemäß der bereits in den auslaufenden Zahnkranz einer Brennkraftmaschine eingespurt wird. Hierfür wird der Startermotor während des Auslaufens der Brennkraftmaschine bereits bestromt und auf eine bestimmte Drehzahl gebracht. Ein solcher Start kann mitunter dazu führen, dass der Startermotor länger bestromt wird als bei einem sogenannten Kaltstart. Die Startersteuerung kann also unter verschiedenen Startstrategien abhängig vom Fahrerwunsch individuell reagieren. Eine Möglichkeit ist es, nun die Temperatur des Startermotors als weiteres Entscheidungskriterium für eine bestimmte Start-Stopp-Strategie einzusetzen.

Um noch besser die Temperatur der elektrischen Maschine abschätzen zu können, wird bevorzugt, die Motortemperatur mit der Temperatur des Startermotors verglichen und davon abhängig die Grenztemperatur der elektrischen Temperatur von einem Regeltemperaturwert verschoben. Durch den Vergleich der Motortemperatur, die bereits der Motorsteuerung durch Messung der Öl- bzw. Wassertemperatur bereits vorliegt, kann besser auf die Gesamttemperatur des Startermotors geschlossen werden, da der Startermotor in der Nähe der Brennkraftmaschine befestigt ist und durch eine gewisse Konvektion der Brennkraftmaschine in etwa die selbe Gesamttemperatur aufweist. Es kann somit leichter festgestellt werden, ob es sich beim Startvorgang um einen Kaltstart oder um einen Start an einem warmen Motor handelt, der bereits eine höhere Temperatur beispielsweise über 80°C aufweist. Hat der Startermotor bereits eine höhere Temperatur, so sind obere Grenztemperaturwerte schneller bei einem Start erreichbar. In diesem Fall ist der Regeltemperaturwert nach unten zu korrigieren. Ist der Startermotor kühler, weil ein Kaltstart vorliegt, so kann die Grenztemperatur entweder am eingestellten Regeltemperaturwert bleiben oder nach oben verschoben werden.

Um einen Lerneffekt für neue Vorrichtungskonstruktionen oder im laufenden Betrieb des Kraftfahrzeugs zu schaffen, werden nach einem weiter bevorzugten Verfahren, Zustände einer Temperaturüberschreitung vom Startermotor als Fehlerzustände in einen Speicher zur Fehlerdiagnose abgespeichert. Somit ist im Falle eines Defekts oder Missbrauchs eine exakte Dokumentation vorhanden, die bei einer Kundendienstinspektion des Kraftfahrzeugs ausgelesen werden und entsprechend ausgewertet werden kann, so dass in Zukunft kritische Temperaturzustände vermieden werden können. Im Übrigen ist die Steuerung aufgrund der Fehlerdiagnose entsprechend einstellbar bzw. nachjustierbar.

Die Aufgabe wird auch durch ein Computerprogrammprodukt gelöst, dass in einem Programmspeicher mit Programmbefehlen von einer Steuerung, insbesondere der Startersteuerung ladbar ist, um alle Schritte des oben beschriebenen Verfahrens auszuführen, wenn das Programm in der Steuerung ausgeführt wird. Das Computerprogrammprodukt ist in einen Halbleiterspeicher oder einen anderen bekannten Speicher niederlegbar. Das hat den Vorteil, dass individuelle Kundenwünsche bzw. Anpassungen an den Startertyp bzw. die Brennkraftmaschine des Kraftfahrzeugs leicht möglich sind und gegebenenfalls während des laufenden Betriebs optimierbar sind. Die Hardware muss somit nicht aufwändig geändert werden. Die Steuerung kann entweder die Startersteuerung oder bereits bekannte Steuerungen sein, die im Fahrzeug vorhanden sind, beispielsweise eine Motorsteuerung. Eine aufwändige Logik-Programmierung von Ansteuerungszeiten des Startermotors entfällt, da lediglich mindestens ein Kennfeld mit Temperaturgrenznen in der Steuerung integriert werden müssen.

Es versteht sich, dass die vorstehend genannten und nachstehend noch zu erläuternden Merkmale nicht nur in der jeweils angegebenen Kombination, sondern auch in anderen Kombinationen verwendbar sind.

### Kurze Beschreibung der Zeichnungen

Die Erfindung wird im Folgenden unter Bezugnahme auf die Zeichnungen näher erläutert. Es zeigen:
- Fig.1: einen schematischen Verbau einer Startvorrichtung mit einer Brennkraftmaschine

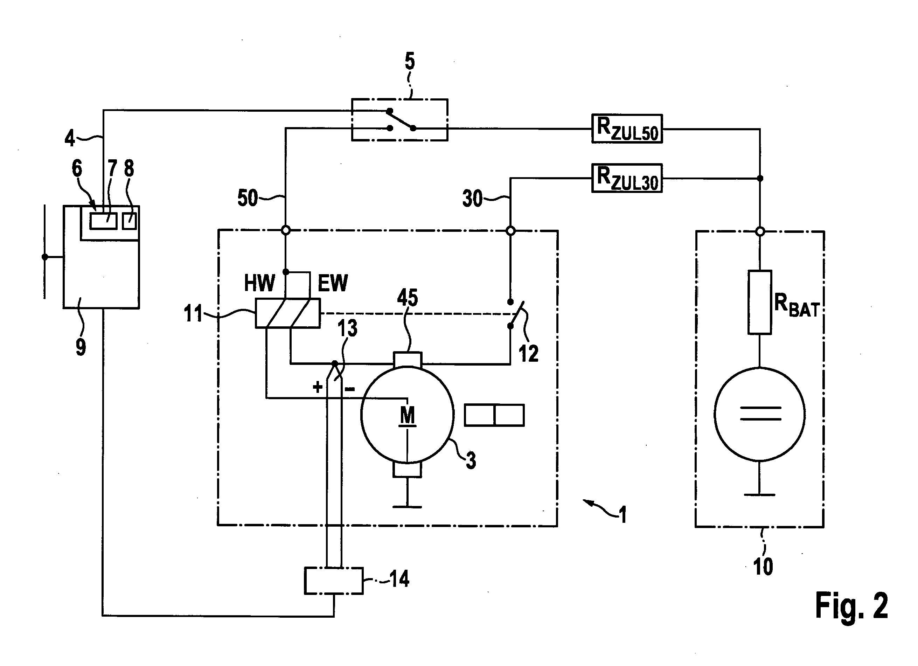

- Fig.2: einen schematischen Schaltplan einer Startvorrichtung,
- Fig.3: einen schematischen Schaltplan eines thermischen Sensors,
- Fig.4: einen Ausschnitt einer elektrischen Maschine mit einem bevorzugten Messbereich und
- Fig. 5: ein Flussdiagramm eines bevorzugten erfindungsgemäßen Verfahrens.

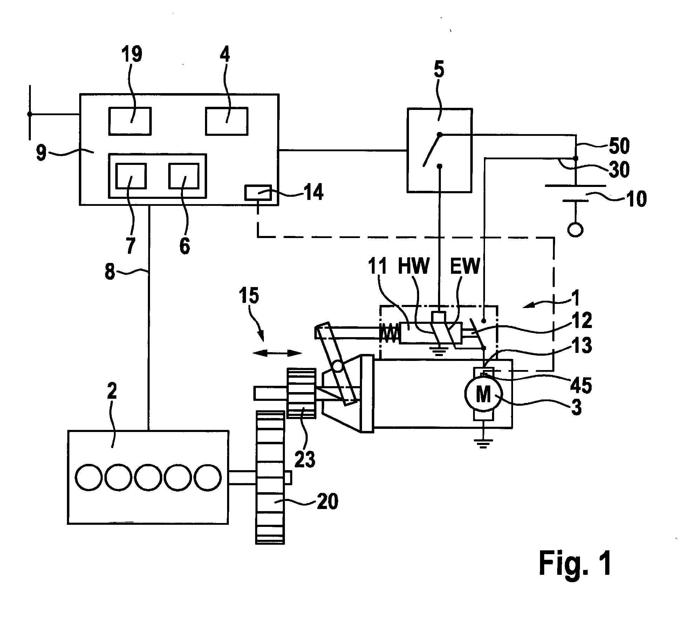

Die Fig. 1 zeigt eine Startvorrichtung 1 zum Starten einer Brennkraftmaschine 2. Die Startvorrichtung 1 umfasst einen Startermotor 3 und eine Startersteuerung 4.

Die Startersteuerung 4 ist in die Motorsteuerung 9 integriert und wird mittels Schalter 5, dem Zündschloss, aktiviert. Die Motorsteuerung 9 weist eine Steuereinheit 6 mit einem Mikrocomputer 7 und einem Speicher 8 auf.

Aus Gründen der Reduzierung der Bauteile und der Effizienz ist, wie in der Fig. 1 gezeigt, bevorzugt die Startersteuerung 4 in der Motorsteuerung 9 integriert. Die Motorsteuerung 9 steuert die Brennkraftmaschine 2 an. Die Motorsteuerung 9 erhält Werte von Sensoren von der Brennkraftmaschine. Steuer- und Sensorleitungen zwischen der Motorsteuerung 9 und der Brennkraftmaschine 2 sorgen für eine Informationsübermittlung in beiden Richtungen. Der Startermotor 3 wird von einer Batterie 10 mit elektrischem Strom über die Leitungen 50 und 30 versorgt. Über die Steuerleitung 50 und Schalter 5, Zündschloss wird der Starter sowie die Motorsteuerung 9 angesteuert.

Um die Belastung der Batterie 10 beim Starten des Startermotors 3 zu senken, wird der Startermotor 3 über ein Schaltrelais angesteuert, das eine hochohmige Einzugswicklung EW und eine Haltewicklung HW aufweist. Der Startermotor 3 wird über die Einzugswicklung EW mit einem kleinen Strom vorbestromt, so dass ein Schalter 12 die Leitung 30 schließt und der Startermotor 3 anschließend mit einem maximalen Strom beaufschlagt wird.

Pluspolseitig ist erfindungsgemäß ein thermischer Sensor 13 an einem stromführenden Element angeordnet. Der thermische Sensor 13 nimmt die Temperatur der elektrischen Maschine 3 auf. Außerhalb der elektrischen Maschine befindet sich eine Auswerteelektronik 14 von dem thermischen Sensor 13, der Messsignale an die Startersteuerung 6 in der Motorsteuerung 9 liefert. Durch den in der elektrischen Maschine 3 eingebauten Temperatursensor 13 kann somit der Startermotor 3 in einem Temperaturfenster und nicht wie bisher üblich innerhalb eines Zeitfensters angesteuert werden, um eine thermische Beschädigung zu vermeiden. Es wird also direkt abhängig von der tatsächlichen Temperatur des Startermotors 3 entschieden, wie lange der Startermotor 3 tatsächlich betrieben werden kann, ohne eine Beschädigung zu erzeugen. Die entsprechenden Schaltstrategien für den Startermotor 3 sind in der Startersteuerung 6 niedergelegt, die mit einprogrammierten Temperaturgrenzwerten arbeitet. Der Startermotor 3 startet die Brennkraftmaschine 2 dadurch, dass eine mechanische Kopplung 15 zur Brennkraftmaschine beispielsweise in Form eines Starterritzels 23, das in einen Zahnkranz 20 der Brennkraftmaschine 2 eingespurt wird, geschaffen wird. Eine mechanische Kopplung 15 kann auch in jeder anderen bekannten Form ausgebildet sein und einen Riemen mitumfassen.

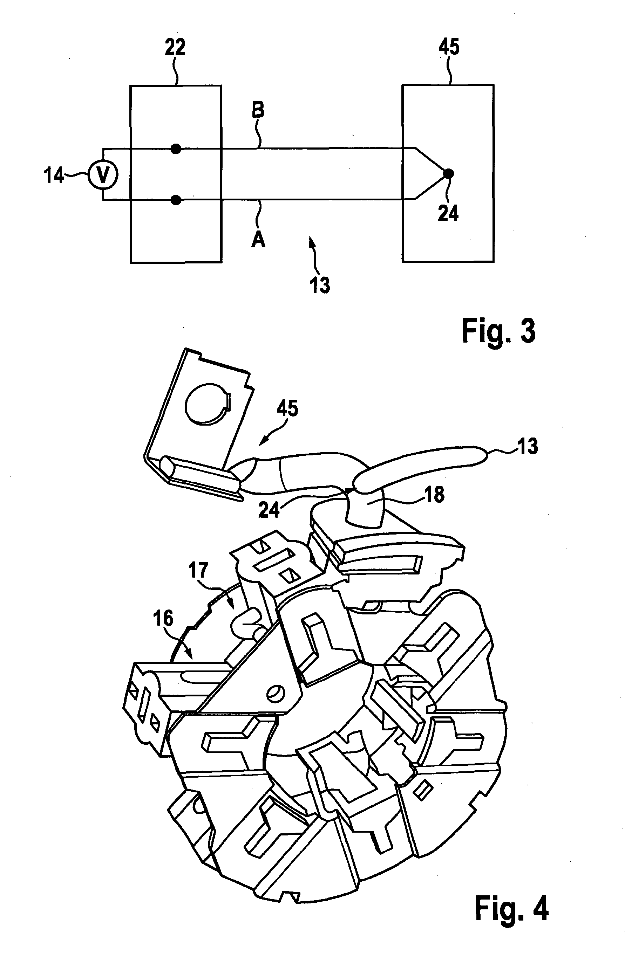

Die Fig. 3 zeigt schematisch und vergrößert einen thermischen Sensor 13, der auf dem Seebeck-Effekt basiert. Zwei Halbleitermetalle werden an einem Punkt verbunden und eine Temperaturdifferenz wird von diesen verschiedenartig dotierten Metallen aus einer Potentialdifferenz abgeleitet.

Der Temperaturmesspunkt 24 kann sich z.B. an der Litze Klemme 45 befinden. Vom Messpunkt 24 sind die zwei Metalle A, B bis zu einer Vergleichsstelle ausgebildet, die eine Potentialdifferenz bei Temperaturänderung aufgrund des Seebeck-Effektes ergeben. Mittels einer Potentialmessvorrichtung 22, vergleiche Fig.3, wird das Differenzpotential mittels der Auswerteelektronik 14 ausgewertet und in Form von Signalen an die Startersteuerung 6 übermittelt.

Die Fig. 4 zeigt in perspektivischer Ansicht einen Ausschnitt des elektrischen Startermotors 3 mit einer pluspolseitigen Stromschiene 16 und einer minuspolseitigen Bürstenplatte 17. An einer Klemme 45 ist die Stromleitung über die Einzugswicklung EW und die direkte Leitung 30 miteinander verbunden. An der Klemme 45 verbindet die Litze 46 mit einem Kabelschuh 18 die Stromschiene 16. Da die Litze 46 durch elektrische Erwärmung am ehesten kritische Temperaturen erreicht, weil hierüber der Starter-Haupstrom fließt, ist der thermische Sensor 13 an dieser Leitung mit einem Messpunkt 24 angeordnet. Im Übrigen kann, wie oben beschrieben, der thermische Sensor 13 sich natürlich auch an anderen elektrischen Komponenten befinden oder an der elektrischen Maschine.

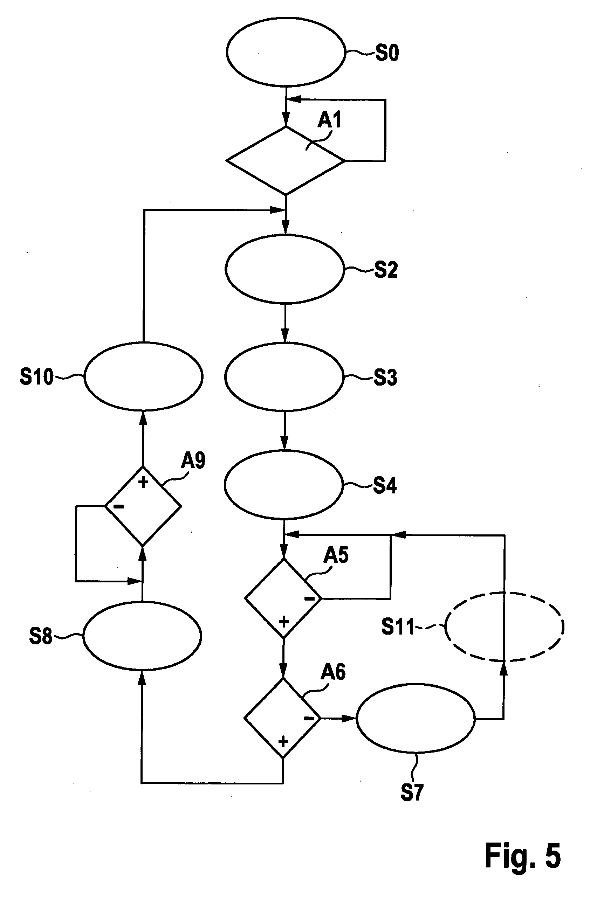

Die Fig. 5 zeigt ein Flussdiagramm eines besonderen Verfahrenablaufs, wie ihn ein Computerprogrammprodukt in einer Startersteuerung 4 bevorzugt ausführt. In einem ersten Schritt S0 wird vom Fahrer beispielsweise durch Drücken eines Startknopfes oder Drehen eines Zündschlüssels signalisiert, dass die Brennkraftmaschine 2 zu starten ist. Hierfür geht beispielsweise ein Signal an die Motorsteuerung 9 und die Startersteuerung 4, um die Startvorrichtung 1 mit dem Startermotor 3 zum Starten der Brennkraftmaschine 3 zu aktivieren. *Aus Vereinfachungsgründen ist der Zündschlossschalter und ein Start-Stopp-Schalter zum Schalter 5 zusammengefasst.*

In einem Abfrageschritt A1 wird überprüft, ob der Startermotor 3 unter einer kritischen Temperaturgrenze ist, in der der Startermotor 3 einen sicheren Start ausführen kann, sodass es während der Bestromung nicht zum Glühen oder brennen von inneren oder äußeren Komponenten kommt. Liegt bereits vor dem Startwunsch des Fahrers ein unzulässige Grenztemperatur vor, wird die Abfrage solange durchlaufen, bis der Startermotor 3 auf eine Temperatur gesunken ist, die unter der kritischen Temperaturgrenze liegt. Erst danach geht die Steuerung zum nächsten Schritt über.

In einem Schritt S2 schließt die mechanische Kopplungsvorrichtung 15, dass heißt, das Starterritzel 23 spurt in den Zahnkranz 20 ein, so dass der Startermotor 3 mit der Brennkraftmaschine 2 mechanisch verbunden wird.

Im Schritt S3 wird die Brennkraftmaschine 2 mittels des Startermotors 3 gestartet, in dem der Startermotor 3 zuerst über die Einzugswicklung EW und anschließend durch Schließen des Schalters 12, dass heißt, dass Relais zieht an, eine Kontaktbrücke schließt und der Hauptstrom an Klemme 30 zu Klemme 45 wird geschlossen, so dass direkt über die Leitung 30 und die Klemme 45 bestromt wird, wobei das Schaltrelais 11 den Schalter 12 über die Haltewicklung HW geschlossen hält. Erfindungsgemäß wird dabei bevorzugt die Temperatur an z.B. der Litze Klemme 45 über den Temperatursensor 13 abgefragt und auf eine zulässige erste Grenztemperatur überprüft. Falls die Grenztemperatur überschritten wird, wird der Startermotor ausgeschaltet. Somit wird mittels Termperaturüberwachung ein gezieltes Abschalten des Starters bei Überlastung geregelt Bei einer Temperatur von kleiner 40°C an Brennkraftmaschine und Startvorrichtung ist von einem Start am kalten Motor auszugehen, so dass der Startermotor 3 bis zu einer in der Steuerung hinterlegten ersten oberen Grenztemperatur belastet werden kann. Dabei erwärmt sich der Startmotor 3 innen stärker, so dass beispielsweise als obere Grenztemperatur an der Litze 45 eine kritische Temperatur von 150°C vorgegeben werden kann. Die Grenztemperaturen sind abhängig von dem jeweiligen Ausführungstyp des Startermotors und der Startermotor-Brennkraftmaschinenkombination.

Ferner gibt es auch Starts an einer warmen Brennkraftmaschine. Hierbei hat der Startermotor in etwa dieselbe Temperatur durch Konvektion der Brennkraftmaschine. Deshalb könnte die kritische Temperatur etwas herabgesetzt werden unter 150°C.

Sobald die Brennkraftmaschine 2 gestartet ist, wird in einem Schritt S4 der Startermotor 3 durch Öffnen des Schalters 12 gestoppt und die Kopplungsvorrichtung 15 trennt die mechanische Kopplung zwischen Startermotor 3 und Brennkraftmaschine 2.

In einem Abfrageschritt A5 wird abgefragt, ob eine Start-Stopp-Bedingung vorliegt. Liegt keine Start-Stopp-Bedingung der Brennkraftmaschine 2 vor, so wird der Start-Stopp Modus deaktiviert. Diese Abfrage wird solange wiederholt, bis eine Bedingung, insbesondere eine zulässige Temperaturgrenze vorliegt. Wurde die zulässige Temperatur durch Abkühlen während dem Fahrbetrieb oder bei Stand an einer Ampel wieder erreicht, wird der Start-Stopp Modus wieder aktiviert.

In einem weiteren Abfrageschritt A6 wird abgefragt, ob die Temperatur des Startermotors 3 unterhalb einer zweiten, bestimmten Grenztemperatur liegt. Diese zweite Grenztemperatur kann auch im Vergleich mit einer Temperatur von der Brennkraftmaschine 2 ausgewertet werden. Die Abfrage A6 umfasst ein Temperaturfenster, in dem festgelegt ist, in welchem Bereich ein Start-Stopp-Betrieb vom Startermotor 3 zugelassen wird.

Liegt die Temperatur, die mit dem Thermoelement 13 des Startermotors 3 gemessen wird, oberhalb der zweiten, festgelegten Grenztemperatur für den Start-Stopp-Betrieb so geht die Steuerung zum Programmschritt S7 über, in dem sie einen Stopp der Brennkraftmaschine 2 nicht zulässt und optional in Schritt S11 der Fahrer informiert wird, dass die Startermotortemperatur erhöht ist und deshalb der Start-Stopp-Betrieb zeitweise außer Kraft gesetzt ist.

Liegt im positiven Fall die Temperatur des Startermotors 3 unter einer festgelegten zweiten Grenztemperatur, so wird in einem Schritt S8 die Brennkraftmaschine 2 gestoppt.

In einer Abfrage A9 wird geprüft, ob die Startbedingungen zum Starten der Brennkraftmaschine 2 vorliegen. Im positiven Fall geht die Steuerung weiter zum Schritt S10, in dem nach einer flexiblen Starterstrategie, die Motorsteuerung 9 mit der Brennkraftmaschine 2 und dem Startermotor 3 bzw. der Startersteuerung 4 angesteuert wird, um die Brennkraftmaschine 2 wieder zu starten. Die Steuerung geht dann wieder in den Schritt S2 über. Alle Figuren zeigen lediglich schematische nicht maßstabsgerechte Darstellungen. Im Übrigen wird insbesondere auf die zeichnerischen Darstellungen für die Erfindung als Wesentlich verwiesen.

## Patentansprüche

1. Verfahren zum Betreiben einer Startvorrichtung (1) zum Starten einer Brennkraftmaschine (2) mit einem Startermotor (3) und einer Startersteuerung (4), wobei ein thermischer Sensor (13) im Startermotor (3) mit der Startersteuerung (4) in Wirkverbindung steht und der Startermotor (3) von der Startersteuerung (4) in Abhängigkeit von Messwerten des thermischen Sensors (13) angesteuert wird, wobei der Startermotor (3) von der Startersteuerung (4) angesteuert wird und dabei mittels des thermischen Sensors (13) überprüft wird, ob der Startermotor (3) unter einer Grenztemperatur in einem Temperaturfenster betrieben wird, andernfalls wird der Startermotor (3) ausgeschaltet, **dadurch gekennzeichnet, dass** zwei Grenztemperaturen, eine höhere für einen Kaltstart und eine niedrigere für einen Start-Stopp-Betrieb festgesetzt sind.

2. Verfahren nach Anspruch 1, **dadurch gekennzeichnet, dass** eine Regelbetriebszeit vom Startermotor (3) abhängig von der tatsächlichen Temperatur des Startermotors variiert wird.

3. Verfahren nach einem Anspruch 1 oder 2, **dadurch gekennzeichnet, dass** während eines Start-Stopp-Betriebsmodus der Brennkraftmaschine (2) für einen Stopp der Brennkraftmaschine (2) die Temperatur des Startermotors (3) abgefragt wird und der Start-Stopp Modus der Brennkraftmaschine (2) dann deaktiviert wird, wenn die Temperatur des Startermotors (3) eine unzulässigen Startgrenztemperatur aufweist.

4. Verfahren nach einem der Ansprüche 1 bis 3, **dadurch gekennzeichnet, dass** während eines Start-Stopp-Betriebsmodus der Brennkraftmaschine (2) die Temperatur des Startermotors (3) abgefragt wird und eine Startstrategie der Brennkraftmaschine (2) in Abhängigkeit der Temperatur des Startermotors (3) von der Startersteuerung (4) ausgeführt wird.

5. Verfahren nach einem der Ansprüche Anspruch 1 bis 4, **dadurch gekennzeichnet, dass** die Motortemperatur mit der Temperatur des Startermotors (3) verglichen wird und davon abhängig die Grenztemperatur von einem Regeltemperaturwert herabgesetzt wird.

6. Verfahren nach einem der Ansprüche 1 bis 5, **dadurch gekennzeichnet, dass** Zustände einer Temperaturüberschreitung des Startermotors (3) als Fehlerzustände in einem Fehlerdiagnosespeicher abgespeichert werden.

7. Computerprogramm, das dazu hergerichtet ist, alle Schritte des Verfahrens nach einem der Ansprüche 1 bis 6 auszuführen.

8. Startersteuerung (6), die dazu hergerichtet ist, alle Schritte des Verfahrens nach einem der Ansprüche 1 bis 6 auszuführen.

9. Startvorrichtung (1) zum Starten einer Brennkraftmaschine (2) mit einem Startermotor (3) und einer Startersteuerung (6), die den Startermotor (3) ansteuert, **dadurch gekennzeichnet, dass** die Startersteuerung als eine Startersteuerung nach Anspruch 8 ausgebildet ist.

## Claims

1. Method for operating a starting device (1) for starting an internal combustion engine (2) with a starter motor (3) and a starter controller (4), wherein a thermal sensor (13) in the starter motor (3) is operatively connected to the starter controller (4), and the starter motor (3) is actuated by the starter controller (4) as a function of measured values of the thermal sensor, wherein the starter motor (3) is actuated by the starter controller (4) and in the process it is checked by means of the thermal sensor (13) whether the starter motor (3) is operating below a limiting temperature in a temperature window, and otherwise the starter motor (3) is switched off, **characterized in that** two limiting temperatures, a higher one for a cold start and a lower one for a Start/Stop operating mode are defined.

2. Method according to Claim 1, **characterized in that** a regulation operating time of the starter motor (3) is varied as a function of the actual temperature of the starter motor.

3. Method according to either of Claims 1 and 2, **characterized in that** during a Start/Stop operating mode of the internal combustion engine (2) the temperature of the starter motor (3) is interrogated for a stop of the internal combustion engine (2), and the Start/Stop mode of the internal combustion engine (2) is deactivated when the temperature of the starter motor (3) has an inadmissible starting limiting temperature.

4. Method according to one of Claims 1 to 3, **characterized in that** during a Start/Stop operating mode of the internal combustion engine (2) the temperature of the starter motor (3) is interrogated and a starting strategy of the internal combustion engine (2) is actuated by the starter controller (4) as a function of the temperature of the starter motor (3).

5. Method according to one of Claims 1 to 4, **characterized in that** the motor temperature is compared with the temperature of the starter motor (3), and the limiting temperature of a regulating temperature value is reduced as a function thereof.

6. Method according to one of Claims 1 to 5, **characterized in that** states of a temperature being exceeded by the starter motor (3) are stored as false states in a fault diagnostic memory.

7. Computer program which is configured to carry out all the steps of the method according to one of Claims 1 to 6.

8. Starter controller (6) which is configured to carry out all the steps of the method according to one of Claims 1 to 6.

9. Starting device (1) for starting an internal combustion engine (2) having a starter motor (3) and a starter controller (6) which actuates the starter motor (3), **characterized in that** the starter controller is embodied as a starter controller according to Claim 8.

## Revendications

1. Procédé pour faire fonctionner un dispositif de démarrage (1) pour démarrer un moteur à combustion interne (2) comprenant un démarreur (3) et une commande de démarreur (4), un capteur thermique (13) dans le démarreur (3) étant en liaison fonctionnelle avec la commande de démarreur (4) et le démarreur (3) étant commandé par la commande de démarreur (4) en fonction de valeurs de mesure du capteur thermique (13), le démarreur (3) étant commandé par la commande de démarreur (4) et en l'occurrence on vérifie au moyen du capteur thermique (13) si le démarreur (3) fonctionne en dessous d'une température limite dans une fenêtre de températures, sinon le démarreur (3) est déconnecté, **caractérisé en ce que** deux températures limites, une température supérieure pour un démarrage à froid et une température inférieure pour un fonctionnement start-stop, sont fixées.

2. Procédé selon la revendication 1, **caractérisé en ce que** l'on fait varier un temps de fonctionnement de régulation du démarreur (3) en fonction de la température effective du démarreur.

3. Procédé selon l'une quelconque des revendications 1 ou 2, **caractérisé en ce que** pendant un mode de fonctionnement start-stop du moteur à combustion interne (2), pour un arrêt du moteur à combustion interne (2), la température du démarreur (3) est interrogée et le mode start-stop du moteur à combustion interne (2) est désactivé si la température du démarreur (3) présente une température limite de démarrage non admissible.

4. Procédé selon l'une quelconque des revendications 1 à 3, **caractérisé en ce que** pendant un mode de fonctionnement start-stop du moteur à combustion interne (2), la température du démarreur (3) est interrogée et une stratégie de démarrage du moteur à combustion interne (2) est mise en oeuvre en fonction de la température du démarreur (3) par la commande de démarreur (4).

5. Procédé selon l'une quelconque des revendications 1 à 4, **caractérisé en ce que** la température du moteur est comparée avec la température du démarreur (3) et en fonction de cette comparaison, la température limite est abaissée d'une valeur de température de régulation.

6. Procédé selon l'une quelconque des revendications 1 à 5, **caractérisé en ce que** des états d'un dépassement de température du démarreur (3) sont mémorisés en tant qu'états d'erreur dans une mémoire de diagnostic d'erreur.

7. Programme informatique, prévu pour mettre en oeuvre toutes les étapes du procédé selon l'une quelconque des revendications 1 à 6.

8. Commande de démarreur (6) prévue pour mettre en oeuvre toutes les étapes du procédé selon l'une quelconque des revendications 1 à 6.

9. Dispositif de démarrage (1) pour démarrer un moteur à combustion interne (2) comprenant un démarreur (3) et une commande de démarreur (6) qui commande le démarreur (3), **caractérisé en ce que** la commande de démarreur est réalisée sous forme de commande de démarreur selon la revendication 8.
